(19) Europäisches Patentamt
European Patent Office
Office européen des brevets

(11) Veröffentlichungsnummer : **0 356 714 B1**

# (12) EUROPÄISCHE PATENTSCHRIFT

(45) Veröffentlichungstag der Patentschrift :
**11.03.92 Patentblatt 92/11**

(51) Int. Cl.$^5$ : **C08J 9/00,** C08L 33/24, C08K 3/04, B32B 5/18, H01B 1/24

(21) Anmeldenummer : **89113924.8**

(22) Anmeldetag : **28.07.89**

## (54) Hartschaum als Kernmaterial für Schichtwerkstoffe.

(30) Priorität : **04.08.88 DE 3826469**

(43) Veröffentlichungstag der Anmeldung :
**07.03.90 Patentblatt 90/10**

(45) Bekanntmachung des Hinweises auf die Patenterteilung :
**11.03.92 Patentblatt 92/11**

(84) Benannte Vertragsstaaten :
**AT BE CH DE ES FR GB IT LI NL SE**

(56) Entgegenhaltungen :
**GB-A- 1 083 960**

(73) Patentinhaber : **Röhm GmbH**
**Kirschenallee Postfach 4242**
**W-6100 Darmstadt 1 (DE)**

(72) Erfinder : **Krieg, Manfred, Dr.**
**Kesselhutweg 19**
**W-6100 Darmstadt (DE)**
Erfinder : **Rau, Herbert, Dr.**
**Hohemarkweg 4**
**W-6231 Sulzbach/Ts. (DE)**
Erfinder : **Ude, Werner, Dr.**
**Birngartenweg 115**
**W-6100 Darmstadt-Arheilgen (DE)**

EP 0 356 714 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft einen neuen Polymethacrylimid-Hartschaumstoff, der sich als Kernmaterial für Schichtwerkstoffe, insbesondere für den Flugzeugbau, eignet, sowie ein Verfahren zur Herstellung des neuen Hartschaumstoffes.

Es ist bekannt, Polymethacrylimid-Hartschaumstoffe als Kernmaterial für Schichtwerkstoffe bzw. Schaumstoff-Verbundkörper zu verwenden; vgl. DE-C-28 22 885, DE-A-33 04 882, US-A-4 316 934. Bei der Anwendung solcher Schichtwerkstoffe in schnell strömenden Gasen, beispielsweise im Flugzeugbau, wurden gelegentlich Materialfehler, wie Ablösungen oder Aufblähungen beobachtet, die sich aus der mechanischen Beanspruchung nicht erklären ließen.

Der Erfindung lag die Aufgabe zugrunde, die Ursache solcher Materialfehler zu ergründen und zu beseitigen. Es wurde gefunden, daß sie nicht auftreten, wenn der Polymethacrylimid-Hartschaumstoff einen Gehalt von 0,1 bis 10 Gew.-% an elektrisch leitfähigen Partikeln aufweist. Daraus wurde gefolgert, daß die Ursache der erwähnten Materialfehler in blitzähnlichen elektrischen Entladungen aufgrund einer elektrostatischen Aufladung der Oberflächen des Schichtwerkstoffes zu suchen ist. Die erfindungsgemäß eingesetzten Polymethacrylimid-Hartschaumstoffe haben bei einem Gehalt von beispielsweise 2 Gew.-% Leitruß Oberflächenwiderstände von $10^3$ bis $10^8$ Ohm, was sich als ausreichend erweist, um elektrostatische Aufladungen abzuleiten.

Es ist zwar schon bekannt, Leitruß oder andere elektrisch leitfähige Partikel in Schaumstoffe einzubringen, um sie leitfähig zu machen. Derartige Schaumstoffe werden als Verpackungsmaterial für elektronische Bauelemente oder ähnliche Gegenstände verwendet, die empfindlich gegen elektrische Entladungen sind. Auch zur Abschirmung elektromagnetischer Strahlung werden rußgefüllte Schaumstoffe verwendet. Die in EP-B-79 080, EP-A-105 384, EP-A-186 887, EP-A-223 615 und US-A-4 493 788 beschriebenen Schaumstoffe enthalten zwischen 5 und 40 Gew.-% an leitfähigem Ruß, in der Praxis meistens 10 bis 20 Gew.-% Ruß, der in eine Matrix aus Massenkunststoffen, wie Polystyrol, Polyäthylen oder Polyurethan, eingelagert ist. Die wesentlichen Eigenschaften von Polymethacrylimidschaumstoff würden bei Rußgehalten über 10 Gew.-% verlorengehen.

Es gab bisher keinen Anlaß, einen hochwertigen Konstruktions-Hartschaum, wie Polymethacrylimid-Schaumstoff, mit leitfähigen Partikeln zu füllen, weil er für Verpackungszwecke oder als Abschirmmaterial gegen Strahlungen nicht in Betracht zu ziehen war.

Bei den erwähnten Anwendungen war es unbeachtlich, ob die mechanischen Eigenschaften durch den hohen Gehalt an leitfähigen Zusätzen beeinträchtigt werden. Im Gegensatz dazu müssen die Polymethacrylimid-Hartschaumstoffe gemäß der Erfindung ihre guten mechanischen und thermischen Eigenschaften, wie Druckfestigkeit, Kriechfestigkeit bei hohen Temperaturen und Wärmeformbeständigkeit auch bei Zusatz der leitfähigen Partikel im wesentlichen beibehalten, weil diese Eigenschaften bei der Verwendung als Kernmaterial von Schichtwerkstoffen unerläßlich sind. Es hat sich überraschenderweise gezeigt, daß der Polymethacrylimid-Hartschaumstoff schon bei sehr niedrigen Gehalten an Leitruß, beispielsweise 1,6 Gew.-%, einen Widerstand von $10^6$ Ohm·cm erreichen kann. Für die Ableitung schädlicher elektrostatischer Aufladungen und für die Vermeidung der eingangs erwähnten Materialschäden erwies sich dieser Gehalt an leitfähigem Material als ausreichend. Die mechanischen und thermischen Eigenschaften des Schaumstoffes werden davon noch nicht entscheidend beeinträchtigt.

Polymethacrylimid-Hartschaumstoffe zeichnen sich durch wiederkehrende Einheiten der Struktur

$$\begin{array}{ccccccccc} - CH_2 & - & C(CH_3) & - & CH_2 & - & C(CH_3) & - \\ & & | & & & & / & \\ & & CO & - & NH & - & CO & \end{array}$$

aus, die mehr als 50 Gew.-%, vorzugsweise 60 - 90 Gew.-% der Einheiten des Polymerisats ausmachen. Die Einheiten bilden sich beim Erhitzen auf 150 - 250°C aus benachbarten Einheiten von Methacrylsäure und Methacrylnitril durch eine cyclisierende Isomerisierungsreaktion; vgl. DE-C-27 26 259 und DE-27 26 260. Verfahren zur Herstellung von Polymethacrylimid-Hartschaumstoffen durch radikalische Polymerisation eines Gemisches, das Methacrylsäure und Methacrylnitril als Monomere sowie ein beim Erhitzen gasbildendes Treibmittel enthält, und Erhitzen des gebildeten Polymerisats bis zur Bildung eines Polymethacrylimid-Hartschaumstoffes sind bekannt.

Die erfindungsgemäßen Polymethacrylimid-Hartschaumstoffe werden hergestellt, indem man dem zu polymerisierenden oder schon teilweise polymerisierten Gemisch 0,1 bis 10 Gew.-% an elektrisch leitfähigen Partikeln zusetzt. Sie können in Form von Pulvern oder Fasern vorliegen. Ihre Teilchengröße kann zwischen 10 nm und 10 mm liegen. Sie können aus Metall, wie Aluminium, Nickel, Eisen-Legierungen, Titan, Zinn, aus metallisierten Nichtleitern, wie nickel-beschichtetem Glimmer, aus Kohlenstoff in Form von Graphit oder sog.

Leitruß oder aus bekannten Halbleitern bestehen. Hoch leitfähige Ruße, die als Leitruße im Handel sind, z.B. unter der Handelsbezeichnung "Ketjenblack(R) EC" der Akzo Chemie, sind besonders bevorzugt. Sie zeichnen sich durch einen Aschegehalt unter 1 % und ein Porenvolumen von 300-600 $cm^3$/100 g aus. Das Schüttgewicht liegt beispielsweise zwischen 100 und 250 $kg/m^3$ und die spezifische Oberfläche BET ($N_2$) bei 50 bis 2000 $m^2/g$.

Der Bedarf an elektrisch leitfähigen Partikeln in dem Hartschaumstoff, der erforderlich ist, um die oben beschriebenen Fehler zu vermeiden, hängt in erster Linie von der Qualität des elektrisch leitfähigen Materials, ferner von der Dichte des Schaumstoffes und zum geringeren Teil von der Dicke der Hartschaumschicht in einem Schichtwerkstoff ab. Ein Gehalt von 10 Gew.-% ist selten erforderlich. In der Regel sind Mengen von 0,5 bis 5 Gew.-% ausreichend. Besonders bevorzugt ist der Bereich von 1 bis 3 Gew.-%.

Die Wirksamkeit der eingebrachten elektrisch leitfähigen Partikel hängt in vielen Fällen von weiteren Faktoren und Maßnahmen bei der Polymerisation ab. Es ist förderlich für die Wirksamkeit, wenn das zu polymerisierende Gemisch während der Polymerisation möglichst homogen bleibt. In manchen Fällen besteht eine Neigung zur Entmischung, die auf die Unlöslichkeit des bereits gebildeten Polymeren in den noch verbliebenen Monomeren zurückgeht. Die Neigung zur Entmischung wird unterdrückt, wenn das Gemisch als Comonomere Styrol und/oder ein cyclisches Maleinsäurederivat enthält. Als solche kommen Maleinsäureanhydrid und Maleinsäureimide, die am Stickstoffatom unsubstituiert oder durch niedere Alkylreste, wie Methyl, oder durch Arylreste, wie Phenyl, substituiert sein können, in Betracht. Der Anteil dieser Comonomeren liegt z.B. bei 10 bis 30 Gew.-%, bezogen auf das Gesamtgewicht an polymerisierbaren Monomeren. In diesem Fall können als Treibmittel Formamid und/oder niedere, aliphatische Alkohole eingesetzt werden.

Die niederen Alkohole, d.h. solche mit bis zu 8 C-Atomen, wirken sich ebenfalls vorteilhaft auf die Homogenität des Gemisches aus. Bevorzugt sind sekundäre und tertiäre Alkohole mit 3 bis 8 C-Atomen, wie Isopropyl- oder tert. Butylalkohol. Sie werden vorzugsweise in Mengen von 1 bis 15 Gew.-%, bezogen auf das Gewicht an polymerisierbaren Monomeren, eingesetzt.

Als weitere Comonomere können geringe Mengen an Vernetzungsmitteln, wie Allylacrylat oder -methacrylat, Äthylenglykol-diacrylat oder -dimethacrylat oder mehrwertige Metallsalze der Acryl- oder Methacrylsäure, wie Magnesium-methacrylat, mit Vorteil mitverwendet werden; die Mengen betragen beispielsweise 0,05 bis 1 Gew.-%.

Weiterhin hat es sich als vorteilhaft, in manchen Fällen als unerläßlich erwiesen, das mit elektrisch leitfähigen Partikeln versetzte polymerisierbare Gemisch vor Beginn der Polymerisation sehr intensiv zu durchmischen. Geeignet sind z.B. sogenannte Homogenisatoren oder Dispergatoren, die ein schnell laufendes Rühraggregat enthalten. Ein gebräuchliches Gerät dieser Art ist unter dem Namen "Ultraturrax(R)" der Firma Janke & Kunkel GmbH & Co KG im Handel. Charakteristisch für solche Geräte ist ein Rotor-Stator-System, das hochfrequent läuft und die gerührte Flüssigkeit einer hohen Scherung aussetzt. Es wurde festgestellt, daß die intensive Rührung der Ansammlung von elektrisch leitfähigen Partikeln in nicht leitungswirksamen Aggregaten entgegenwirkt.

Die Polymerisation des Gemisches erfolgt in an sich bekannter Weise in flachen Schichten von 10 bis 40 mm Dicke, beispielsweise in einer aus zwei Glasplatten und einer dazwischen am Rand umlaufenden Dichtungsschnur gebildeten Flachkammer. Durch Eintauchen in ein Wasserbad von 30 bis 60°C wird die Polymerisation unter der Wirkung eines in dem Gemisch gelösten radikalbildenden Initiators ausgelöst und in der Regel durch eine Nacherhitzung bei 60 bis 120°C vollendet. Die Polymerisation dauert im allgemeinen 20 bis 150 Stunden. Man erhält ein plattenförmiges Polymerisat, das beim Erhitzen auf 180 bis 250°C in 1 bis 5 Stunden zu einem Polymethacrylimid-Hartschaumstoff mit einer Dichte zwischen 30 und 300 $kg/m^3$ expandiert.

Leitfähigkeitsmessungen an dem erhaltenen Schaumstoff ergeben bei einem Gehalt von 1 bis 2 Gew.-% an Leitruß einen Oberflächenwiderstand unter $3 \times 10^7$ Ohm, vorzugsweise $10^5$ - $2 \times 10^6$ Ohm, einen Durchgangswiderstand von $6 \times 10^5$ bis $10^9$ Ohm·cm bzw. eine Leitfähigkeit über $10^{-6}$ Siemens/cm.

Zur Herstellung von Schichtwerkstoffen werden aus dem erhaltenen Schaumstoffblock Tafeln von beispielsweise 1 bis 100 mm Dicke geschnitten und ein- oder bevorzugt beidseitig mit einem Deckmaterial laminiert. Als Deckmaterial können Metallfolien und -bleche, Kunststoffolien und faserverstärkte Kunststoffschichten verwendet werden. Die Deckschichten sind in der Regel dünner als die Kernschicht aus Polymethacrylimid-Hartschaumstoff, beispielsweise 0,1 bis 5 mm dick. Vorgefertigte Deckmaterialien können mit geeigneten Klebern auf den Schaumstoff aufgebracht werden. Faserverstärkte Schichten werden bevorzugt durch das sog. Prepreg-Verfahren erzeugt. Dazu wird eine faserhaltige Schicht eines duroplastischen Kunstharzes auf die Schaumstoffschicht aufgepreßt und unter Druck und Hitze gehärtet und gleichzeitig mit dem Schaumstoff verbunden. Die hohe Druck- und Hitzebeständigkeit der Polymethacrylimid-Hartschaumstoffe kommt dieser Arbeitsweise sehr entgegen. Im übrigen wird bezüglich der Laminiertechnik auf die DE-C-28 22 885, DE-A-33 04 882 und US-A-4 316 934 verwiesen.

Schichtwerkstoffe dieser Art eignen sich als konstruktive Leichtbauelemente auch unter hoher mechanischer Belastung und gegebenenfalls erhöhten Betriebstemperaturen bis zu 160°C. Typische Anwendungsgebiete finden sich im Bau von Flugkörpern, in der Weltraumtechnik, bei Komponenten oder Einbauten von Windkanälen, sowie generell bei allen Anwendungen mechanisch beanspruchter Teile in Berührung mit schnell strömenden Gasen.

In den nachfolgenden Ausführungsbeispielen wird die Herstellung von Polymethacrylimid-Hartschaumstoffen mit einem Gehalt an elektrisch leitfähigen Partikeln beschrieben und jeweils der elektrische Durchgangswiderstand und Oberflächenwiderstand angegeben. Die Mengenangaben (T) sind jeweils Gewichtsteile.

Beispiel 1

Ein Gemisch aus 56,2 T Methacrylsäure, 43,8 T Methacrylnitril, 4 T Isopropanol, 0,2 T Allylmethacrylat und 1,6 T Leitruß (Handelsprodukt "Ketjenblack[R] 600 EC", Akzo Chemie) wird mit einem schnellaufenden Rührgerät ("Ultraturrax[R]", Janke & Kunkel) unter starker Scherung gerührt, bis es sich auf 50°C erwärmt hat. Nach dem Abkühlen werden 0,05 T Azo-bis-isibutyronitril eingemischt und die Masse in eine aus zwei Glasscheiben und dazwischen am Rand umlaufendem Dichtungsprofil gebildete Flachkammer von 30 mm lichter Weite gefüllt. Die Flachkammer wird in einem Wasserbad 70 Stunden auf 45°C und in einem Wärmeschrank noch weitere 13 Stunden auf 115°C erhitzt. Man erhält eine 25 mm dicke Polymerisatplatte, die durch zweistündiges Erhitzen auf 230°C zu einem Schaumstoff mit einer Dichte von 70 kg/m$^3$ aufschäumt.
Elektrischer Durchgangswiderstand $10^7$ Ohm·cm.
Elektrischer Oberflächenwiderstand $10^6$ Ohm.

Beispiel 2

Man verfährt wie im Beispiel 1, erhitzt jedoch zum Schäumen auf 200°C. Es entsteht ein Schaumstoff mit einer Dichte von 190 kg/m$^3$.
Elektrischer Oberflächenwiderstand $10^6$ Ohm.
Elektrischer Durchgangswiderstand $10^7$ Ohm·cm.

Beispiel 3

Nach dem im Beispiel 1 beschriebenen Verfahren wird folgende Mischung zubereitet und polymerisiert: 52,5 T Methacrylsäure, 22,5 T Methacrylnitril, 15 T Styrol, 10 T Maleinsäureanhydrid, 0,4 T Allylmethacrylat, 1 T Formamid, 1,5 T Leitruß (Handelsprodukt "Ketjenblack[R] 600 EC", Akzo Chemie).
Beim Erhitzen der erhaltenen Polymerisatplatte auf 200°C während 2 Stunden entsteht ein Schaumstoff mit einer Dichte von 65 kg/m$^3$.
Elektrischer Oberflächenwiderstand $10^5$ Ohm.
Elektrischer Durchgangswiderstand $10^6$ Ohm·cm.

Beispiel 4

Nach dem Verfahren von Beispiel 3, jedoch unter Verwendung von 2,2 T Leitruß und unter Erhitzen auf 210°C, entsteht ein Schaumstoff mit einer Dichte von 69 kg/m$^3$.
Elektrischer Oberflächenwiderstand $10^4$ Ohm.

Beispiel 5

Eine Mischung aus 52,5 T Methacrylsäure, 22,5 T Methacrylnitril, 10 T Styrol, 15 T Phenylmaleinimid, 0,3 T Allylmethacrylat, 1 T Formamid und 1,5 T Leitruß (Handelsprodukt "Ketjenblack[R] 600 EC", Akzo Chemie) wird entsprechend der Methode von Beispiel 1 verarbeitet und ergibt beim Erhitzen der daraus erzeugten Polymerisatplatte auf 195°C einen Schaumstoff mit einer Dichte von 98 kg/m$^3$.
Elektrischer Oberflächenwiderstand $10^5$ Ohm.

Beispiel 6

Nach dem Verfahren von Beispiel 1 wird folgende Mischung verarbeitet: 50 T Methacrylsäure, 50 T Methacrylnitril, 5 T Isopropanol, 0,2 T Allylmethacrylat, 1,6 T Leitruß (Handelsprodukt "Ketjenblack[R] 600 EC", Akzo Chemie).

Beim Erhitzen der erhaltenen Polymerisatplatte auf 240°C entsteht ein Schaumstoff mit einer Dichte von 85 kg/m$^3$.

Elektrischer Oberflächenwiderstand $10^5$ Ohm.
Elektrischer Durchgangswiderstand $10^5$ Ohm·cm.

Beispiel 7

Nach dem Verfahren von Beispiel 1 wird folgende Mischung verarbeitet: 56,2 T Methacrylsäure, 43,8 T Methacrylnitril, 4 T Isopropanol, 0,07 T Allylmethacrylat, 1,6 T Leitruß (Handelsprodukt "Ketjenblack[R] 600 EC", Akzo Chemie), 5 T Carbonfasern (Handelsprodukt "Sigrafil[R]", Firma Sigri). Beim Erhitzen der erhaltenen Polymerisatplatte auf 210°C entsteht ein Schaumstoff mit einer Dichte von 105 kg/m³.
Elektrischer Oberflächenwiderstand $10^4$ Ohm.

Beispiel 8

In eine Flachkammer, die aus zwei Glasplatten einer Größe von 50 x 50 cm und einem dazwischen am Rand umlaufenden Dichtungsprofil von 22 mm Höhe zusammengesetzt ist, werden zwei Lagen eines sehr flauschigen, zusammendrückbaren, aus Polyesterfasern und Metallfasern aus nichtrostendem Stahl gebildeten Vlieses von je 5 cm Dicke eingelegt. Die beiden Vliese enthalten zusammen 150 g Metallfasern. Anschließend wird ein Gemisch von 2,81 kg Methacrylsäure und 2,19 kg Methacrylnitril, 5 g tert.-Butylperpivalat, 2,5 g Dibenzoylperoxid, 1,625 kg Isopropanol und 1,375 kg tert.-Butanol eingefüllt und die Kammer dicht verschlossen.

Zur Polymerisation wird die Flachkammer während 3 Tagen in ein Wasserbad von 48°C eingetaucht und danach 3 Stunden in einem Wärmeschrank bis 115°C erhitzt. Das plattenförmige Polymerisat wird der Flachkammer entnommen und durch dreistündiges Erhitzen auf 240°C geschäumt. Die Expansion ist senkrecht zur Plattenebene deutlich größer als in Richtung der Plattenebene. Der entstandene Schaumstoff hat eine Dichte von 150 kg/m³.
Elektrischer Durchgangswiderstand $10^3$ Ohm·cm.
Elektrischer Oberflächenwiderstand 2 x $10^5$ Ohm.

## Patentansprüche

1. Polymethacrylimid-Hartschaumstoff, gekennzeichnet durch einen Gehalt von 0,1 bis 10 Gew.-% an elektrisch leitfähigen Partikeln.
2. Polymethacrylimid-Hartschaumstoff nach Anspruch 1, gekennzeichnet durch eine Teilchengröße der elektrisch leitenden Partikel zwischen 10 nm und 10 mm.
3. Polymethacrylimid-Hartschaumstoff nach Anspruch 1 oder 2, dadurch gekennzeichnet, daß er Ruß, insbesondere hoch leitfähigen Ruß, als elektrisch leitfähige Partikel enthält.
4. Polymethacrylimid-Hartschaumstoff nach einem oder mehreren der Ansprüche 1 bis 3, dadurch gekennzeichnet, daß er in Form einer 1 bis 100 mm dicken Tafel vorliegt.
5. Polymethacrylimid-Hartschaumstoff nach einem oder mehreren der Ansprüche 1 bis 4, dadurch gekennzeichnet, daß er den Kern eines Schichtwerkstoffes bildet.
6. Verfahren zur Herstellung eines Polymethacrylimid-Hartschaumstoffes durch radikalische Polymerisation eines Methacrylsäure und Methacrylnitril als Monomere sowie ein beim Erhitzen gasbildendes Treibmittel enthaltenden Gemisches und Erhitzen des gebildeten Polymerisats bis zur Bildung eines Polymethacrylimid-Hartschaumstoffes, dadurch gekennzeichnet, daß dem zu polymerisierenden Gemisch 0,1 bis 10 Gew.-% an elektrisch leitfähigen Partikeln zugesetzt werden.
7. Verfahren nach Anspruch 6, dadurch gekennzeichnet, daß als Treibmittel ein aliphatischer Alkohol mit bis Zu 8 C-Atomen eingesetzt wird.
8. Verfahren nach einem der Ansprüche 6 oder 7, dadurch gekennzeichnet, daß das zu polymerisierende Gemisch vor Beginn der Polymerisation einer hochfrequenten Rührung mittels eines Rotor-Stator-Systems ausgesetzt wird.
9. Verfahren nach einem der Ansprüche 6 bis 8, dadurch gekennzeichnet, daß ein Gemisch polymerisiert wird, das als weitere Monomere Styrol und/oder ein cyclisches Maleinsäurederivat enthält.
10. Schichtwerkstoff, enthaltend eine Kernschicht aus einem Polymethacrylimid-Hartschaumstoff gemäß einem oder mehreren der Ansprüche 1 bis 5 und ein- oder beidseitig auflaminierte Deckschichten aus Metallfolien oder -blechen, Kunststoffolien oder faserverstärkten Kunststoffschichten.
11. Verwendung des Polymethacrylimid-Hartschaumstoffes gemäß einem oder mehreren der Ansprüche 1 bis 5 oder des Schichtwerkstoffes gemäß Anspruch 10 zum Bau von Flugkörpern, Windkanälen oder Teilen davon.

## Claims

1. Hard polymethacrylimide foam, characterised in that it contains from 0.1 to 10 wt.-% of electrically conductive particles.

2. Hard polymethacrylimide foam according to claim 1, characterised in that the electrically conductive particles have a particle size between 10 nm and 10 mm.

3. Hard polymethacrylimide foam according to claim 1 or 2, characterised in that it contains carbon black, more particularly highly conductive carbon black, as the electrically conductive particles.

4. Hard polymethacrylimide foam according to one or more of claims 1 to 3, characterised in that it takes the form of a board 1 to 100 mm thick.

5. Hard polymethacrylimide foam according to one or more of claims 1 to 4, characterised in that it forms the core of a laminated material.

6. A process for preparing a hard polymethacrylimide foam by radical polymerisation of a methacrylic acid and methacrylonitrile as monomers and a mixture containing a propellent which forms gas when heated and heating the resulting polymer until a hard polymethacrylimide foam is formed, characterised in that 0.1 to 10 wt.-% of electrically conductive particles are added to the mixture which is to be polymerised.

7. A process according to claim 6, characterised in that an aliphatic alcohol having up to 8 carbon atoms is used as the propellent.

8. A process according to one of claims 6 and 7, characterised in that the mixture to be polymerised is exposed, before the start of polymerisation, to high-frequency stirring by means of a rotor-stator system.

9. A process according to one of claims 6 to 8, characterised in that a mixture is polymerised which contains as further monomers styrene and/or a cyclic maleic acid derivative.

10. Laminated material, containing a core layer of a hard polymethacrylimide foam according to one or more of claims 1 to 5 and covering layers, applied on one or both sides, of metal film or sheet metal, plastics film or fibre-reinforced plastics coatings.

11. Use of the hard polymethacrylimide foam according to one or more of claims 1 to 5 or the laminated material according to claim 10 for the construction of missiles, wind tunnels or parts thereof.

## Revendications

1. Mousse dure de polyméthacrylimide, caractérisée par une teneur de 0,1 à 10% en poids de particules électroconductrices.

2. Mousse dure de polyméthacrylimide selon la revendication 1, caractérisée par une grosseur de grains des particules électroconductrices comprise entre 10 nm et 10 mm.

3. Mousse dure de polyméthacrylimide selon la revendication 1 ou 2, caractérisée en ce qu'elle contient du noir de carbone, en particulier du noir de carbone de pouvoir conducteur élevé, en tant que particules électroconductrices.

4. Mousse dure de polyméthacrylimide selon l'une quelconque des revendications 1 à 3, caractérisée en ce qu'elle se présente sous la forme à un panneau de 1 à 100 mm d'épaisseur.

5. Mousse dure de polyméthacrylimide selon l'une quelconque des revendications 1 à 4, caractérisée en ce qu'elle constitue l'âme d'un matériau stratifié.

6. Procédé de fabrication d'une mousse dure de polyméthacrylimide par polymérisation radicalaire d'un mélange contenant de l'acide méthacrylique et du méthacrylonitrile en tant que monomères, ainsi qu'un agent moussant formant un gaz au chauffage, et par chauffage du polymère formé jusqu'à la formation d'une mousse dure de polyméthacrylimide, caractérisé en ce que 0,1 à 10% en poids de particules électroconductrices sont ajoutés au mélange à polymériser.

7. Procédé selon la revendication 6, caractérisé en ce qu'un alcool aliphatique renfermant jusqu'à 8 atomes de carbone est utilisé comme agent moussant.

8. Procédé selon la revendication 6 ou 7, caractérisé en ce que le mélange à polymériser est soumis, avant le début de la polymérisation, à une agitation à haute fréquence au moyen d'un système à rotor-stator.

9. Procédé selon l'une quelconque des revendications 6 à 8, caractérisé en ce qu'on polymérise un mélange qui contient, en tant qu'autres monomères, du styrène et/ou un dérivé cyclique de l'acide maléique.

10. Matériau stratifié, contenant une couche d'âme faite d'une mousse dure de polyméthacrylamide selon l'une quelconque des revendications 1 à 5, et des couches de recouvrement, appliquées d'un côté ou des deux côtés, constituées par des feuilles ou des tôles métalliques, des feuilles de matière plastique ou des couches de matière plastique renforcées de fibres.

11. Utilisation de la mousse dure de polyméthacrylimide selon l'une quelconque des revendications 1 à 5

ou du matériau stratifié selon la revendication 10 pour la construction d'engins volants, de tunnels aérodynamiques ou d'éléments de ceux-ci.